# NEUE EUROPÄISCHE PATENTSCHRIFT

(11) **EP 2 475 494 B2**
(45) Veröffentlichungstag und Bekanntmachung des Hinweises auf die Entscheidung über den Einspruch: **08.05.2019**
(45) Hinweis auf die Patenterteilung: 11.11.2015
(21) Anmeldenummer: 10747822.4
(22) Anmeldetag: 14.08.2010
(51) Int. Cl.: B23K 26/18, B23K 37/00, B23K 26/30, F16P 1/02, F16P 1/06

(54) **LASERSCHUTZMODUL ZUM SCHUTZ EINES OBJEKTES MIT EINEM MIT EINEM DAMPF- ODER RAUCHBILDENDEN MATERIAL GEFÜLLTEN HOHLRAUM**
LASER PROTECTION MODULE FOR PROTECTING AN OBJECT, COMPRISING A CAVITY FILLED WITH STEAM OR SMOKE GENERATING MATERIAL
MODULE DE PROTECTION DES EFFETS LASER POUR PROTÉGER UN OBJET, MUNI D'UN ESPACE CREUX REMPLI D'UN MATÉRIAU GÉNÉRATEUR DE VAPEUR OU DE FUMÉE

(30) Priorität: 09.09.2009 DE 102009040661
(43) Veröffentlichungstag der Anmeldung: 18.07.2012
(73) Patentinhaber: Rheinmetall Waffe Munition GmbH, 29345 Unterlüss (DE)
(72) Erfinder: TEN HAVE, Eric, 29223 CeIIe (DE); GOWIN, Michael, 29320 Hermannsburg (DE)
(74) Vertreter: Dietrich, Barbara
(86) Internationale Anmeldenummer: PCT/EP2010/005013
(87) Internationale Veröffentlichungsnummer: WO 2011/029514

(56) Entgegenhaltungen:
- DE-A1- 3 842 115
- DE-B3-102006 036 500
- DE-U1-202007 006 710
- JP-A- 62 183 986
- US-A- 4 262 186
- US-A- 5 151 095
- US-A- 5 326 616

## Beschreibung

Die Erfindung betrifft ein Laserschutzmodul zum Schutz eines Objektes vor der Bestrahlung mit Laserlicht, insbesondere vor der Bestrahlung von Laserlicht eines Hochenergielasers gemäß dem Oberbegriff des Anspruchs 1 (siehe, z.B., DE 10 2006 036 500 B3).

Vor allem für die Flugabwehr im Nahbereich werden seit einer Reihe von Jahren Laserwaffen-Systeme entwickelt, bei denen das Laserlicht eines Hochenergielasers während eines vorgegebenen Zeitraumes auf ein anfliegendes Flugziel gerichtet wird, um entweder dessen Strukturteile oder das Material seiner Sensoren oder anderer Suchkopfteile zu zerstören.

Der Schutz gegen Laserstrahlen gestaltet sich in der Praxis recht schwierig, weil die Strahlen in der Regel von dem Ziel weggelenkt werden müssen und die Verwendung einer spiegelnden Oberfläche des zu schützenden Zieles häufig nicht möglich ist.

Aus der DE 10 2006 036 500 B3 ist es bereits bekannt, zum Schutz vor Laserstrahlen bei einer Laserbearbeitungsanlage eine Schutzkabine zu verwenden, welche aus mehreren Wandelementen besteht. Jedes dieser Wandelemente umfasst einen Hohlkörper, der mit einem lichtstreuenden Material, beispielsweise Quarzsand oder einem Granulat aus einer porösen Keramik, gefüllt ist, sodass in den Hohlkörper gelangendes Laserlicht gestreut wird und Personen außerhalb der Schutzkabine nicht gefährdet werden.

Die DE 20 2007 006 710 U1 betrifft eine passive, Laserstrahlen eines Lasers aufhaltende Schutzwand für eine Lasereinrichtung. Diese Schutzwand umfasst einen Behälter mit einem flüssigen Medium sowie eine im Behälter befindliche Füllstandsüberwachungseinrichtung für das Medium. Das flüssige Medium besitzt eine hohe Wärmekapazität und ist elektrisch leitfähig. Sinkt der Füllstand des Mediums, wird eine Widerstandsänderung im Medium ermittelt, sodass bei einer Änderung die Abschaltung der Lasereinrichtung erfolgt. Durch konvektive Strömung an der Innenseite des Behälters kann Energie effektiv abgeführt und verteilt werden.

Die JP 62 183986 A offenbart eine Lasereinrichtung, bei welcher der Laserstrahl effektiver genutzt und die Peripheriegeräte geschützt werden soll. Die Außenfläche eines Kühlbehälters dient als reflektierende Fläche. In der oberen Hälfte des Kühlbehälters befindet sich Wasser zum Kühlen. Durch eine weitere reflektierende Fläche eines Stahlrohrs wird der Laserstrahl vollständig abgeschirmt und reflektiert, sodass der Laserstrahl effektiv verwertet werden kann.

Der Erfindung liegt die Aufgabe zugrunde, ein Laserschutzmodul zu offenbaren, welches an der Außenfläche eines zu schützenden Objektes anordbar und, unabhängig von der verwendeten Wellenlänge des Lasers, bis zu sehr hohen Laserleistungen einsetzbar ist.

Diese Laserschutzmodule können auch zu Laserschutzzwecken bei der Lasermaterialverarbeitung in industriellen Anwendungen oder wissenschaftlichen Laborumgebungen etc. verwendet werden.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass das Laserschutzmodul aus einem mit dem zu schützenden Objekt verbindbaren Hohlkörper besteht, dessen Hohlraum mit einem bei der Bestrahlung mit Laserlicht dampf- oder rauchbildenden Material gefüllt ist. Bei ausreichend hoher Energie des Laserlichtes bewirkt dieses dann ein Verdampfen des im Hohlraum befindlichen Materials, wobei der Dampf (Nebel) das Laserlicht streut, sodass das zu schützende Objekt durch das Laserlicht nicht beschädigt wird. Alternativ sollte jedoch zumindest eine Beschädigung des Objektes verzögert werden, um geeignete Gegenmaßnahmen ergreifen zu können.

Der Schutz mittels eines derartigen Laserschutzmoduls ist weitgehend unabhängig von der verwendeten Wellenlänge des Laserlichtes und funktioniert bis zu sehr hohen Laserleistungen. Die Laserschutzmodule sind kostengünstig in der Herstellung und wieder verwendbar. Die zu schützenden Objekte, wie gepanzerte Fahrzeuge oder Flugkörper, Gebäude etc., können einfach mit den erfindungsgemäßen Laserschutzmodulen nachgerüstet werden.

Bei dem in dem Hohlraum des Hohlkörpers befindlichen Material kann es sich beispielsweise um Wasser handeln. Es können aber auch andere Flüssigkeiten oder Gele sowie feste Materialien verwendet werden. Zu beachten wäre, dass diese beim Verdampfen etc. keine schädlichen oder giftige Gase, Feinstaub oder Aerosole etc. erzeugen.

Vorzugsweise ist das Laserschutzmodul derart aufgebaut, dass es mit weiteren, entsprechend aufgebauten Laserschutzmodulen verbindbar ist, sodass der gesamte Oberflächenbereich des zu schützenden Objektes mit einer entsprechenden Schutzeinrichtung versehen werden kann. Sie können dazu Befestigungsmöglichkeiten besitzen (Steckverbindungen wie mittels Nasen, Nute; Schraubverbindungen etc.), durch die die Module miteinander schnell verbindbar aber auch voneinander schnell trennbar sind.

Das Laserschutzmodul kann durch mehrere Zwischenwände unterteilt sein, sodass abgeschlossene Teilräume gebildet werden und bei einer Beschädigung des Lasermoduls nicht der Schutz des gesamten Moduls verloren geht.

Der Hohlkörper des Laserschutzmoduls kann außerdem mit mindestens einem Ventil zum Druckausgleich versehen sein, sodass das Modul bei einer Laserbestrahlung nicht durch den entstehenden Dampf-/Gasdruck beschädigt wird. Zusätzlich kann ein Sensor, z. B. Drucksensor, Füllstandsensor etc, eingebunden werden, über den eine Warnmeldung ausgelöst werden kann.

Das erfindungsgemäße Laserschutzmodul ist derart aufgebaut, dass sich die durch die Laserstrahlung entstandene Öffnung in der Vorderwand des Laserschutzmoduls (die auch eine gegebenenfalls das dampf- oder rauchbildende Material umgebenden Hülle umfasst) selbsttätig wieder verschließt, sobald keine Beaufschlagung des Laserschutzmoduls durch Laserstrahlung mehr besteht. Selbstverschließende Treibstofftanks werden bereits im militärischen als auch im Motorsportbereich verwendet. Der selbstschließende Mechanismus beruht hierbei auf der Verwendung von Gummifolien, deren Material bei der Berührung mit Flüssigkeit aufschwillt, sodass kleine Löcher von selbst verschlossen werden (siehe http://en.wikipedia.org/wiki/Self-sealing fuel tank oder http://www.army-technology.com/contractors/protection/tss/). Die Zusammensetzung der Gummimischung ist dabei auf die verwendetet Flüssigkeit abzustimmen. Von zusätzlichem Vorteil bei den Laserschutzmodulen ist, dass der angreifende Laser die Gummimaterialien erhitzt, sodass die flüssigkeitsinduzierte Schwellung durch eine thermische Schmelzung des Materials unterstützt wird.

Um einen zusätzlichen Schutz vor einer Zerstörung der Rückwand des Laserschutzmoduls zu gewährleisten, hat es sich als vorteilhaft erwiesen, wenn die Innenseite der dem zu schützenden Objekt zugewandten Wand des Hohlkörpers eine stark streuende oder reflektierende Oberfläche besitzt.

Als Außenhülle wird ein leichtes Material bevorzugt, wie beispielsweise Aluminium. Dieses Material lässt sich einfach bearbeiten, besitzt eine hohe Reflexion im Wellenlängenbereich des nahen Infrarot und belastet das zu schützende Objekt nicht mit einem zu hohen zusätzlichen Gewicht.

Da in der Regel nicht nur Schutzmaßnahmen gegen Laserstrahlungen für ein zu schützendes Objekt vorgesehen sind, hat es sich als bevorzugt gezeigt, wenn die Module auch an bereits vorhandene Minenschutz und / oder Schutzmaßnahmen vor dem Beschuss anbringbar sind.

Weitere Einzelheiten und Vorteile der Erfindung ergeben sich aus dem folgenden, anhand einer Figur erläuterten Ausführungsbeispiel.

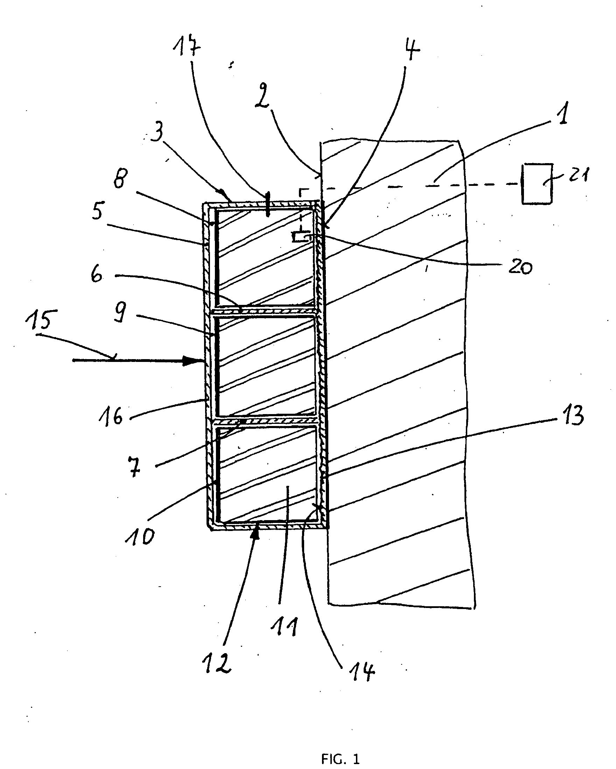

In der Figur ist mit 1 ein gegen die Bestrahlung von Laserlicht zu schützendes Objekt (beispielsweise ein Teilbereich der Außenwand eines gepanzerten Fahrzeuges) angedeutet. Mit der äußeren Oberfläche 2 des zu schützenden Objektes 1 ist ein erfindungsgemäßes Laserschutzmodul 3 beispielsweise mittels eines Klebers 4 verbunden.

Das Laserschutzmodul 3 besteht aus einem Hohlkörper 5 mit im Wesentlichen rechteckigem Querschnitt. Der Hohlkörper 5 ist durch zwei Zwischenwände 6, 7 unterteilt, sodass sich drei abgeschlossene Teilräume 8-10 ergeben.

In jedem der drei Teilräume 8-10 befindet sich eine dampfbildende Flüssigkeit 11 (hier Wasser), die jeweils von einer inneren Hülle 12 umgeben ist, welche die Eigenschaft besitzt, dass sie nach seiner lokalen Zerstörung durch das Laserlicht sich selbsttätig im Anschluss an die Bestrahlung wieder schließt.

Die Innenseite der dem zu schützenden Objekt 1 zugewandten Rückwand 13 des Hohlkörpers 5 ist außerdem gemäß der Erfindung mit einer stark streuenden Oberfläche 14 versehen.

Trifft nun ein fokussierter Laserstrahl 15 auf die dem zu schützenden Objekt 1 abgewandte Vorderwand 16 des Laserschutzmoduls 3, so wird zunächst ein Teil der Energie des Laserstrahles 15 von der Vorderwand 16 absorbiert und deren Temperatur erhöht sich. Dabei wird durch die im Hohlkörper 5 enthaltene Flüssigkeit 11 die Vorderwand 16 gekühlt, was zu einer Verlängerung der Zeit führt, während der sich der Laserstrahl 15 durch die Vorderwand 16 hindurch brennt.

Nach Durchdringen der Vorderwand 16 (einschließlich der inneren Hülle 12) erhitzt der Laserstrahl 15 die in dem Hohlkörper 5 befindliche Flüssigkeit 11, die mindestens teilweise verdampft. Dabei kann Flüssigkeit 11 aus dem Teilraum 9 durch die von dem Laserstrahl 15 zerstörten Wandbereiche der Vorderwand 16 und der inneren Hülle 12 nach außen austreten, solange die innere Hülle 12 sich nicht wieder selbsttätig geschlossen hat.

Der sich innerhalb des Hohlraumes ausbreitende Dampf streut das Laserlicht sehr stark, sodass der Laserstrahl 15 nicht mehr fokussiert auf die Rückwand 13 des Hohlkörpers 5 fällt und die Leistungsdichte des Laserstrahles 15 so gering ist, dass der Laserstrahl 15 keinen Schaden mehr anrichten kann. Dabei wird die Streuung des Laserlichtes durch die stark streuende Oberfläche 14 der Rückwand 13 des Hohlkörpers 5 unterstützt.

Um zu vermeiden, dass das Laserschutzmodul 3 bei der Laserbestrahlung der Flüssigkeit 11 durch den entstehenden Dampfdruck beschädigt werden kann, sind in den die Teilräume 8-10 außenseitig begrenzenden Seitenwänden Druckventile 17 angeordnet (dieses ist aus Übersichtlichkeitsgründen nur für den Teilraum 10 angedeutet).

Die Erfindung ist selbstverständlich nicht auf das vorstehend beschriebene Ausführungsbeispiel beschränkt. So kann beispielsweise statt einer Flüssigkeit als dampfbildendes Material ein Gel verwendet werden, welches den Vorteil besitzt, dass es nach der Zerstörung der Wand des Hohlkörpers nur in sehr geringer Menge nach außen entweicht. Auch die Verwendung von verdampfbaren festen Stoffen ist denkbar.

Ferner kann das Laserschutzmodul sich seitlich über einen relativ großen Wandbereich erstrecken, ohne dass Teilräume vorhanden sein müssen, sofern stegartige Abstandsteile zwischen der Vorder- und Rückwand einen im Wesentlichen parallelen Verlauf der Vorder- und Rückwand des Laserschutzmoduls sicherstellen.

Zudem kann für eine Warnmeldung im zu schützenden Objekt ein Warngeber 20 installiert werden. Dieser steht in funktionaler Verbindung (elektrische Leitung, Funk etc.) mit einem in der Flüssigkeit oder Gelt etc. ein- bzw. angebundenen Sensor 21. Der Sensor 21 kann dabei ein Drucksensor, Füllstandssensor oder dergleichen sein.

### Bezugszeichenliste

- 1: Objekt
- 2: äußere Oberfläche
- 3: Laserschutzmodul
- 4: Kleber
- 5: Hohlkörper
- 6,7: Zwischenwände
- 8-10: Teilräume
- 11: Flüssigkeit, Material
- 12: innere Hülle
- 13: Rückwand
- 14: Oberfläche
- 15: Laserstrahl, Laserlicht
- 16: Vorderwand
- 17: Druckventil

- 20: Sensor
- 21: Warngeber

## Patentansprüche

1. Laserschutzmodul (3) zum Schutz eines Objektes (1) vor der Bestrahlung mit Laserlicht (15) eines Hochenergielasers, bestehend aus einem, mit dem zu schützenden Objekt (1) verbindbaren Hohlkörper (5), wobei der Hohlraum des Hohlkörpers (5) mit einem bei der Bestrahlung mit Laserlicht (15) dampf- oder rauchbildenden Material (11) gefüllt ist und die Innenseite der dem zu schützenden Objekt (1) zugewandten Rückwand (13) des Hohlkörpers (5) eine stark streuende oder reflektierende Oberfläche (14) besitzt und mindestens die bei der bestimmungsgemäßen Verwendung des Laserschutzmoduls (3) den Laserstrahlen (15) zugewandten Vorderwand (16) des Hohlkörpers (5) oder eine sich an die Vorderwand innenseitig anschließende innere Hülle (12) aus einem Material besteht, das sich nach seiner lokalen Zerstörung durch das Laserlicht (15) selbsttätig im Anschluss an die Bestrahlung wieder schließt.

2. Laserachutzmodul (3) nach Anspruch 1, **dadurch gekennzeichnet, dass** es sich bei dem in dem Hohlraum des Hohlkörpers (5) befindlichen Material (11) um ein flüssiges, gelförmiges oder festes Material handelt.

3. Laserschutzmodul (3) nach Anspruch 2, **dadurch gekennzeichnet, dass** es sich bei dem in dem Hohlraum des Hohlkörpers (5) befindlichen Material (11) um Wasser handelt.

4. Laserschutzmodul (3) nach einem der Ansprüche 1 bis 3, **dadurch gekennzeichnet, dass** das Laserschutzmodul (3) mit weiteren, entsprechend aufgebauten Laserschutzmodulen verbindbar ist.

5. Laserschutzmodul (3) nach einem der Ansprüche 1 bis 4, **dadurch gekennzeichnet, dass** das Laserschutzmodul (3) durch mehrere seitliche Zwischenwände (6, 7) unterteilt ist, die seitlich benachbarte abgeschlossene Teilräume (8-10) bilden.

6. Laserschutzmodul (3) nach einem der Ansprüche 1 bis 5, **dadurch gekennzeichnet, dass** in den Wänden des Hohlkörpers (5) zwecks Druckausgleiches des bei der Verdampfung des Materials (11) entstehenden Gasdruckes Druckventile (17) angeordnet sind.

7. Laserschutzmodul (3) nach Anspruch 6, **dadurch gekennzeichnet, dass** die Druckventile (17) in den die Teilräume (8-10) außenseitig begrenzenden Seitenwänden angeordnet sind.

8. Laserschutzmodul (3) nach einem der Ansprüche 1 bis 7, **dadurch gekennzeichnet, dass** der Hohlkörper (5) einen im Wesentlichen rechteckigen oder quadratischen Querschnitt aufweist.

9. Laserschutzmodul (3) nach einem der Ansprüche 1 bis 8, **dadurch gekennzeichnet, dass** im zu schützenden Objekt (1) ein Warngeber (21) eingebunden ist.

10. Laserschutzmodul (3) nach Anspruch 9, **dadurch gekennzeichnet, dass** der Warngeber (21) mit einem Sensor (20) funktional verbunden ist, der seinerseits mit dem Material (11) im Hohlkörper (5) eine Messeinheit bildet.

11. Laserschutzmodul (3) nach Anspruch 10, **dadurch gekennzeichnet, dass** es sich bei dem Sensor (20) um einen Drucksensor, einen Füllstandsensor etc. handeln kann.

12. Laserschutzmodul (3) nach einem der Ansprüche 1 bis 11, **dadurch gekennzeichnet, dass** die Außenhülle der Hohlkörpers (5) ein leichtes Material, bevorzugt Aluminium, ist.

13. Objekt (1) mit einem Laserschutzmodul (3) nach einem der Ansprüche 1 bis 12.

14. Objekt (1) nach Anspruch 13, **dadurch gekennzeichnet, dass** die Laserschutzmodule (3) über den gesamten Oberflächenbereich des zu schützenden Objektes (1) anbindbar sind, wobei die Laserschutzmodule (3) mittels Steckverbindungen, Schraubverbindungen etc. schnell miteinander verbindbar als auch trennbar sind.

## Claims

1. Laser protection module (3) for protecting an object (1) from irradiation with laser light (15) of a high-energy laser, consisting of a hollow body (5) which can be connected to the object (1) to be protected, wherein the cavity of the hollow body (5) is filled with a material (11) forming vapour or smoke on irradiation with laser light (15) and the inside of the rear wall (13), oriented towards the object (1) to be protected, of the hollow body (5) has a highly dispersive or reflective surface (14) and at least the front wall (16) of the hollow body (5), oriented towards the laser beams (15) during proper use of the laser protection module (3), or an inner shell (12) joining the interior of the front wall, consists of a material which, after being locally destroyed by the laser light (15), automatically closes up subsequent to the irradiation.

2. Laser protection module (3) according to Claim 1, **characterized in that** the material (11) in the cavity of the hollow body (5) is a material in the form of a liquid, a gel or a solid.

3. Laser protection module (3) according to Claim 2, **characterized in that** the material (11) in the cavity of the hollow body (5) is water.

4. Laser protection module (3) according to one of Claims 1 to 3, **characterized in that** the laser protection module (3) can be connected to further laser protection modules of corresponding construction.

5. Laser protection module (3) according to one of Claims 1 to 4, **characterized in that** the laser protection module (3) is divided by multiple lateral partition walls (6, 7) which form laterally adjacent closed subspaces (8-10).

6. Laser protection module (3) according to one of Claims 1 to 5, **characterized in that** pressure valves (17) are arranged in the walls of the hollow body (5) for the purpose of equalizing the pressure of the gas pressure arising on evaporation of the material (11).

7. Laser protection module (3) according to Claim 6, **characterized in that** the pressure valves (17) are arranged in the side walls forming the outer boundary of the subspaces (8-10).

8. Laser protection module (3) according to one of Claims 1 to 7, **characterized in that** the hollow body (5) has an essentially rectangular or square cross section.

9. Laser protection module (3) according to one of Claims 1 to 8, **characterized in that** a warning indicator (21) is integrated into the object (1) to be protected.

10. Laser protection module (3) according to Claim 9, **characterized in that** the warning indicator (21) is functionally connected to a sensor (20) which itself forms, with the material (11) in the hollow body (5), a measuring unit.

11. Laser protection module (3) according to Claim 10, **characterized in that** the sensor (20) can be a pressure sensor, a filling level sensor, etc.

12. Laser protection module (3) according to one of Claims 1 to 11, **characterized in that** the outer shell of the hollow body (5) is a lightweight material, preferably aluminium.

13. Object (1) having a laser protection module (3) according to one of Claims 1 to 12.

14. Object (1) according to Claim 13, **characterized in that** the laser protection modules (3) can be affixed to the entire surface region of the object (1) to be protected, wherein the laser protection modules (3) can be rapidly connected to or separated from one another by means of plug connections, screw connections, etc.

## Revendications

1. Module de protection (3) des effets laser destiné à protéger un objet (1) de l'irradiation à la lumière laser (15) d'un laser à haute énergie, constitué d'un corps creux (5) susceptible d'être assemblé avec l'objet (1) à protéger, dans lequel la cavité du corps creux (5) est remplie d'une matière (11) générant de la vapeur ou de la fumée lors de l'irradiation à la lumière laser (15) et la face intérieure de la paroi arrière (13) du corps creux (5) qui fait face à l'objet (1) qui doit être protégé comporte une surface (14) fortement dispersive ou réfléchissante et au moins la paroi avant (16) du corps creux (5) qui est dirigée vers les rayons laser (15) lors d'une utilisation conforme du module de protection (3) des effets laser ou une enveloppe (12) interne se raccordant sur la paroi avant à l'intérieur est constituée d'une matière qui après sa destruction locale par la lumière laser (15) se referme automatiquement à la suite de l'irradiation.

2. Module de protection (3) des effets laser selon la revendication 1, **caractérisé en ce que** la matière (11) qui se trouve dans la cavité du corps creux (5) est une matière liquide, gélifiée ou solide.

3. Module de protection (3) des effets laser selon la revendication 2, **caractérisé en ce que** la matière (11) qui se trouve dans la cavité du corps creux (5) est de l'eau.

4. Module de protection (3) des effets laser selon l'une quelconque des revendications 1 à 3, **caractérisé en ce que** le module de protection (3) des effets laser est susceptible d'être relié à des modules de protection des effets laser supplémentaires, de structure correspondante.

5. Module de protection (3) des effets laser selon l'une quelconque des revendications 1 à 4, **caractérisé en ce que** le module de protection (3) des effets laser est divisé par plusieurs parois intermédiaires (6, 7) latérales qui forment des espaces partiels (8 à 10) clos, latéralement adjacents.

6. Module de protection (3) des effets laser selon l'une quelconque des revendications 1 à 5, **caractérisé en ce que** pour compenser la pression gazeuse produite lors de l'évaporation de la matière (11), des soupapes de décharge (17) sont placées dans les parois du corps creux (5).

7. Module de protection (3) des effets laser selon la revendication 6, **caractérisé en ce que** les soupapes de décharge (17) sont placées dans les parois latérales délimitant les espaces partiels (8 à 10) sur leur face extérieure.

8. Module de protection (3) des effets laser selon l'une quelconque des revendications 1 à 7, **caractérisé en ce que** le corps creux (5) présente une section transversale sensiblement rectangulaire ou quadratique.

9. Module de protection (3) des effets laser selon l'une quelconque des revendications 1 à 8, **caractérisé en ce qu'**un avertisseur (21) est incorporé dans l'objet (1) qui doit être protégé.

10. Module de protection (3) des effets laser selon la revendication 9, **caractérisé en ce que** l'avertisseur (21) est fonctionnellement relié à un capteur (20), qui pour sa part forme avec la matière (11) dans le corps creux (5) une unité de mesure.

11. Module de protection (3) des effets laser selon la revendication 10, **caractérisé en ce que** le capteur (20) peut être un capteur de pression, un capteur de niveau, etc.

12. Module de protection (3) des effets laser selon l'une quelconque des revendications 1 à 11, **caractérisé en ce que** l'enveloppe extérieure du corps creux (5) est une matière légère, de préférence de l'aluminium.

13. Objet (1) avec un module de protection (3) des effets laser selon l'une quelconque des revendications 1 à 12.

14. Objet (1) selon la revendication 13, **caractérisé en ce que** les modules de protection (3) des effets laser sont susceptibles d'être raccordés sur l'ensemble de la région superficielle de l'objet (1) qui doit être protégé, les modules de protection (3) des effets laser pouvant être raccordés, ainsi que détachés rapidement au moyen de liaisons par enfichage, d'assemblage par vissage, etc.
